# EUROPÄISCHE PATENTANMELDUNG

(11) **EP 1 450 095 A1**
(43) Veröffentlichungstag der Anmeldung: **25.08.2004**
(21) Anmeldenummer: 04003266.6
(22) Anmeldetag: 13.02.2004
(51) Int. Cl.: F16L 55/28

(54) **Gerät für Rohrinnenaufgaben**

(30) Priorität: 18.02.2003 DE 10306714
(71) Anmelder: Bauer, Jens, 01465 Langebrück (DE)
(72) Erfinder: Bauer, Jens, 01465 Langebrück (DE)
(74) Vertreter: Ilberg, Roland W., Dipl.-Ing.

(57) **Zusammenfassung**

Ein über flexible Zuleitungen (6) versorgtes Gerät für Rohrinnenaufgaben Dichtheitsprüfung, Bearbeitung, Sanierung, Reinigung, optische Inspektion und/oder Beförderung von Arbeitsmitteln, wobei ein Kopfstück (1) an einem wurmartigen, lenkaktiv krümmbaren Bereich des Gerätes von einem ersten Rohr aus ein Rohrverzweigungssystem gezielt befahren kann, besitzt einen über seine gesamte Länge und in allen Raumrichtungen und abverlangten Biegewinkeln lenkaktiv krümmbaren Korpus, der einerseits von dem Kopfstück (1) und andererseits von einem Endstück (2) begrenzt wird, an das die flexiblen Zuleitungen (6) angeschlossen sind, die das Gerät beim Befahren des Rohrverzweigungssystems nachführt, wobei im Korpus mindestens drei längenmäßig veränderbare Zug- oder Druckelemente (3,5) für das lenkaktive Krümmen des Gerätes angeordnet sind.

## Beschreibung

Die Erfindung betrifft ein über flexible Zuleitungen versorgtes Gerät für Rohrinnenaufgaben, wobei ein Kopfstück an einem wurmartigen, lenkaktiv krümmbaren Bereich des Gerätes von einem ersten Rohr aus ein Rohrverzweigungssystem gezielt befahren kann.

Aus DE 199 56 421 C2 ist ein Inspektionsroboter bekannt. Dieser hat ein über flexible Zuleitungen versorgtes Fahrwerk zum Bewegen in einem Hauptrohr, an dem ein drehbares Außenrohr angebracht ist, an welchem wiederum eine Abwinkelungseinrichtung für eine Spirale angesetzt ist, und die vorn einen Inspektionskopf trägt. Die Spirale lässt sich nicht nur abwinkeln und drehen, sondern auch mittels einer Vorschubeinrichtung in dem Drehteil durch das Gerät schieben. Im vorderen Teil ist die Spirale biegeweicher. Innerhalb dieses Teil ist ein aufblasbarer Schlauch angeordnet. Beim Aufblasen arbeitet der Schlauch gegen eine in ihrer Steifigkeit abgestimmte Blattfeder, deren beiden Enden jeweils am Gehäuse und an der Kopfspitze fixiert sind, wodurch sich außerdem der Kopf der Spirale mehr oder weniger in zwei Raumebenen ausbiegen lässt. Zur Bewegung in der dritten Raumebene wird die Spirale auf ihrer ganzen Länge durch das Drehteil gedreht. Das Gerät hat einen außerordentlich komplizierten und damit teueren und störanfälligen Aufbau. Da die Spirale vom Fahrwerk und Drehteil aus manipuliert wird und das Fahrwerk nicht in einen Einlauf oder Abzweig fahren kann, sind nur solche Entfernungen vom Hauptrohr aus zu überwinden, die der Länge der Spirale entsprechen. Die Reichweite des Inspektionsroboters ist somit stark begrenzt. Es muss ferner gesehen werden, dass sich eine Spirale bei wachsender Anzahl von Biegungen nur schwer oder gar nicht mehr drehen lässt. Ein Durchfahren der Spirale über mehrere Rohrzweige wird damit ebenso unmöglich wie das Steuern des Kopfes durch Drehen der Spirale vom Drehteil aus. Härtere Arbeitsaufgaben, wie Fräsen, Schneiden oder Bohren, lässt das beschriebene Gerät nicht zu, weil die Blattfeder, die gegen die Gummiblase arbeitet, jeweils federnd nachgibt.

Aus der DE 198 15 579 C1 ist ein über flexible Zuleitungen versorgtes Gerät zum Bearbeiten, Beschichten und/oder Reinigen von Rohrleitungen bekannt, dessen biegestarrer Korpus sich vor Ort im Hauptrohr verklemmen kann und einen Arbeitsmittelträger trägt, der über zu einer Seele exzentrisch angeordnete Zugelemente in allen drei Raumrichtungen so steuerbar ist, dass mit dem Arbeitsmittel jede gewünschte Stelle im Hauptrohr bearbeitet oder untersucht werden kann. Mittels in Abstand auf der Seele angeordneter Klemmstücke im Arbeitsmittelträger werden die Zugelemente zentriert und geführt. Der biegestarre Klemmkorpus des Gerätes und die Klemmstückanordnung auf der Seele des Arbeitsmittelträgers beschränken die Kurvengängigkeit. Geschwenkt wird nur der Arbeitsmittelträger. Dieser Arbeitsmittelträger kann nicht nur die Rohrwand des Hauptrohres bearbeiten, sondern auch in einen Abzweig einfahren und diese bearbeiten. Das Gerät selbst ist nicht zum Einlenken in Zweigrohre und Fahren innerhalb dieser geeignet, da der biegestarre Korpus des Gerätes beim Abbiegen sich verkeilen würde.

In Automobiltechnische Zeitung, Nr. 1, Jan 78, Seite 9 ist unter der Überschrift: "Die Faseroptik überwindet die Grenzen menschlichen Sehens: Sichtkontrolle unzugänglicher Bereiche", ein flexibles faseroptisches Endoskop beschrieben, mit dem von außen eine exakte, auch um Ecken und Kurven steuerbare visuelle Begutachtung schwer zugänglicher Hohlräume möglich ist. Hierfür ist die mit Vorwärts- oder Seitensichtobjektiv versehene Instrumentenspitze bis um 240° abwinkelbar. Da jedoch lediglich die kurze Instrumentenspitze aktiv auslenkbar ist, gelingt es nicht, sich mit dem Endoskop gezielt in einem verzweigten Abwasserkanalsystem zu bewegen. Das Endoskop ist nur für die Sichtkontrolle geeignet. Es kann keinen Eigenantrieb tragen, kein Werkzeug antreiben und keine Arbeitsmaterialien befördern.

Aus der DE 298 14 383 U1 ist eine Schiebekamera zur Inspektion von Abwasserleitungen im Haus- und Hausanschlussbereich bekannt. Die Kamera bildet den Kopf einer biegesteifen Kabelhülle, mit der sie in ein Rohrleitungsnetz geschoben wird. Innerhalb der biegesteifen Kabelhülle laufen längs Seilzüge zum manuellen Verschwenken der Kamera vom hinteren Ende der Kabelhülle aus. Das Kamerakabel ist am Austritt aus der Rohrhülle mit Hilfe der Seilzügen abknickbar. Sofern der Schwenkbereich der Kamera ausreicht, kann die Kamera gezielt in ein Rohr geschoben werden. Die Kamera lässt sich maximal bis zu einer Länge von 50 m in ein Rohr schieben. Sind allerdings enge Rohrbögen oder Abzweige zu durchschieben, verringert sich die Schiebelänge aufgrund der erforderlichen Biegesteifigkeit der Kabelhülle drastisch. Bei dem Versuch, mehrere hintereinander liegende Bögen oder Abzweige zu befahren, versagt die Vorrichtung infolge Verklemmens im Rohrsystem völlig. Das Einsatzgebiet der Vorrichtung ist auf eine Sichtkontrolle des Rohres beschränkt.

Aus DE 197 14 463 A1 ist ein Gerät aus mehreren aneinandergekuppelten Kurzmodulen bekannt, welches auf diese Weise gut Kurven in auch kleineren Rohren nehmen kann. Allerdings ist es nicht in der Weise manövrierfähig, dass an einem Abzweig wahlweise ferngesteuert einer der zur Auswahl stehenden Wege eingeschlagen werden kann. Das Rohr prägt dem Gerät den Fahrweg auf. Die Antriebsaggregate zum Bewegen eines Werkzeugträgers sind auf die einzelnen Module verteilt, was den mechanischen Aufbau sehr kompliziert.

Aus der DE 44 31 842 A1 ist ein elektronisch steuerbarer Automat für Kontroll- und Arbeitsaufgaben in Rohren bekannt, der sich ferngesteuert in einen gewünschten Abzweig oder Einlauf bewegen kann. Es besteht aus zusammengesetzten Modulen, wobei durch hintereinandergeschaltete Kipp- und Drehglieder der Automaten schlangenartig gestaltet ist. Jedes Modul trägt einen hochkomplizierten und somit aufwändigen Verstellmechanismus in sich, weshalb der Automat nicht nur teuer und störanfällig wird, sondern auch schwierig zu lenken ist.

Ferner sind Geräte zur Dichtheitsprüfung von Rohrabschnitten, wie Rohrverbindungen, bekannt. So ist in der GB 212 715 ein Gerät beschrieben, das aus einem kurzen, starren, rohrförmigen Körper besteht, auf welchem zu beiden Stirnseiten aufblasbare Gummiwülste festgelegt sind. An der zu prüfenden Stelle wird das Gerät positioniert und durch Aufblasen der Gummiwülste ein Druckraum im Rohrabschnitt zwischen den Gummiwülsten geschaffen, in den vom Gerät aus Luft, Wasser oder Dampf hineingedrückt wird. Mit einem Detektor wird geprüft, ob ein solcher Druckverlust eintritt, der auf ein Leck schließen lässt. Diese Geräte sind nicht aktiv lenkbar.

Aufgabe der Erfindung ist es, ein Gerät für Rohrinnenaufgaben zu schaffen, das die Vorteile der vorgenannten Geräte vereinigt, ohne jedoch die den Geräten anhaftenden Einschränkungen an Steuerbarkeit, Beweglichkeit, Handhabbarkeit, Betriebszuverlässigkeit und kostengünstiger Ausführbarkeit zu besitzen. Das Gerät soll, sowohl was das Kopfstück betrifft als auch was die gezielt zurückzulegende Wegstrecke in einem verzweigten Rohrsystem betrifft, ferngesteuert hochmanövrierfähig sein. Es soll einen besonders robusten, wartungsarmen und kostenarmen Aufbau besitzen und für alle gängigen Innenrohraufgaben, wie Dichtheitsprüfung, Bearbeitung, Sanierung, Reinigung, optische Inspektion von Rohren und/oder Beförderung von Arbeitsmitteln oder -aggregaten in Rohren einsetzbar sein. Ein Ziel ist es, Haus- und Grundstücksanschlüsse von einem Straßensammler aus zu erreichen und zu befahren.

Die Aufgabe wird erfindungsgemäß durch die Merkmale des Anspruchs 1 gelöst. Vorteilhafte Ausgestaltungen geben die Unteransprüche an.

Mit der Erfindung ist ein Gerät geschaffen worden, dass sich qualitativ vom bekannten Stand der Technik für Rohrarbeiten in Rohren kleiner Durchmesser, wie Hausanschlussrohre, abhebt. Erstmalig können mit einem Gerät auch Haus- und sonstige Grundstücksanschlüsse und dergleichen Ein- bzw. Anbindungen bequem von einem Abwassersammler, Regenwassersammler oder dergleichen straßenseitigen Rohrsystem gezielt angesteuert und weit hinein befahren werden. Bisher waren diese Zweigrohre nur haus- bzw. grundstückseitig erreichbar, wobei das Rohrsystem selbst die Führung des Rohrgerätes ohne Alternativen vorgab. Die Schwierigkeiten bestanden dabei auch darin, diese Rohrleitungen zunächst auffinden zu müssen, da Rohrpläne selten existieren oder aber überholt sind. Von einem Sammler aus kann man jedoch jede einzelne Einmündung, jeden Zulauf und jeden Abzweig erforschen, inspizieren und nötigenfalls bearbeiten.

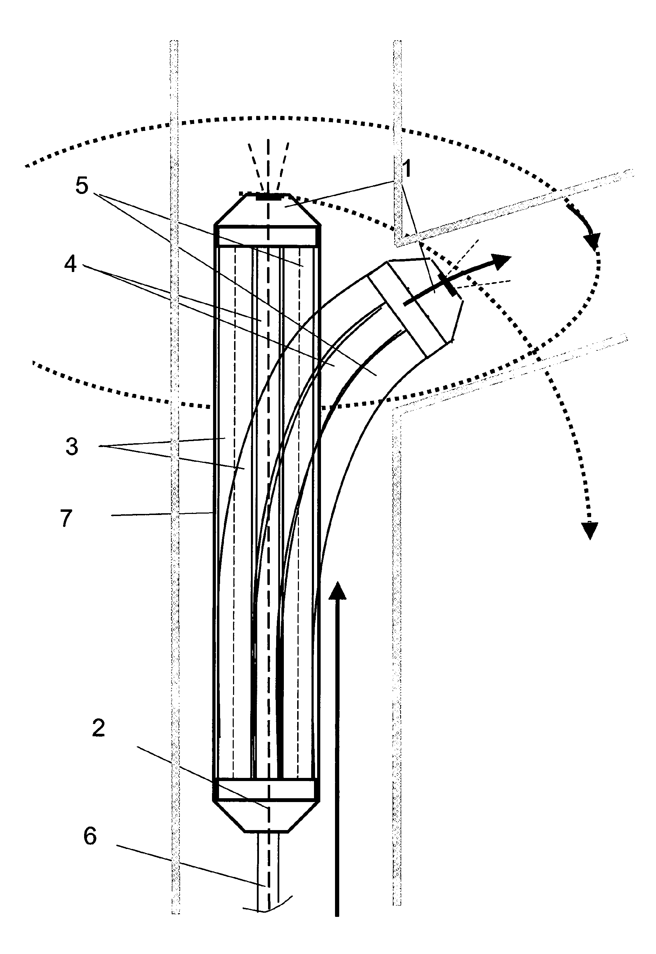

Anhand eines Ausführungsbeispiels soll die Erfindung näher erläutert werden. In der zugehörigen Zeichnung zeigt die einzige Figur einen prinzipiellen Aufbau eines Grundgerätes.

Die Figur zeigt schematisch einen Sammler, in den ein Einlauf mündet. Der Einlauf kann in einem üblichen Winkel von 30°, 45°, 60° oder 90° münden, alle diese Winkel stellen für das Gerät kein Problem dar, in den Einlauf gesteuert eingeführt zu werden und diesen zu befahren.

Ein zum Korpus vergleichsweise sehr kurzes Kopfstück 1 ist umlaufend um die Geräteachse ohne Begrenzung drehbar und das Gerät selbst über seine gesamte Länge bis über 90° krümmbar.

Im wurmartigen Korpus zwischen dem Kopfstück 1 und einem vergleichsweise zum Korpus ebenfalls sehr kurzes Endstück 2 sind mindestens drei Zug- oder Druckelemente 3, 5 eingespannt, von denen lediglich zwei Zugelemente 3, 5 sichtbar sind. Sie können sich um eine biegsame Seele 4 zentrieren oder von einer im Beispiel nicht dargestellten Hülle umfasst sein. Es ist aber auch eine Anordnung ohne Seele oder Hülle realisierbar, wenn die Eigensteifigkeit der Zug- oder Druckelemente groß genug ist. Mit drei Druck- oder Zugelemente 3, 5 kann man ferngesteuert einen Vollkreis schlagen, ohne das Gerät selbst um seine Längsachse drehen zu müssen. Für eine Fernbedienung über eine Konsole hat es sich als zweckmäßig erwiesen, vier Zugelemente 3, 5 um eine Seele 4 zu zentrieren. Als Zugelemente 3, 5 können vorzugsweise Seile, Ketten, Drähte aus längenveränderlichen Formgedächtnislegierungen dienen, die durch Stellmittel, wie Bowdenzüge, Stellzylinder, Elektromagneten, Stromwärme betätigt werden.

In einer bevorzugten Ausführung bestehen jedoch die Zug- oder Druckmittel aus Schläuchen, die bei Druckbeaufschlagung entweder kontrahieren oder sich längen. Die Schläuche 3, 5 werden um eine Seele 4 angeordnet, in einer Hülle gebündelt oder sie halten sich ohne Seele und ohne Hülle selbst mit ihren Mänteln auf Abstand zueinander. Gegebenenfalls sind die Mäntel untereinander verklebt. Auf diese Weise kann auf Abstandhalter oder sonstige Zentriermittel verzichtet werden, denn die Schläuche 3, 5 halten sich gegenseitig zentrierend um die gedachte Längsachse des Gerätes.

Von über Tage werden beispielsweise über kleine Einzelschläuche die Stellschläuche mit Druckluft beaufschlagt, wobei bei Verwendung von Zugschläuchen sich derjenige Schlauch am meisten zusammenzieht und die Krümmungsrichtung des Kopfstücks 1 vorgibt, auf den der höchste Druck gegeben wird. Durch eine entsprechende Drucksteuerung mit Hilfe einer nicht näher dargestellten Steuerkonsole kann jede Raumrichtung und jeder Biegewinkel feinfühlig eingelenkt und verändert werden. Da Druckluft als Arbeitsmedium ohnehin vorhanden ist, wird die gesamte Lenkung äußerst preiswert. Auf eine empfindliche und teuere Elektronik kann verzichtet werden. Die Druck- oder Zugschläuche sind sehr robust, wartungsfrei und kräftig genug, auch das Kopfstück 1 bei Rohrarbeiten zu stabilisieren. Innerhalb des Gerätes entfallen sämtliche Stellmittel, wie Stellzylinder, Steuerventile oder andere mechanische oder elektromechanische Baugruppen. Das Gerät kann sich somit bis hin zum Endstück 2 voll ausbiegen, was der Rohrgängigkeit in engen Rohren oder der Einfahrt in steile Abzweige sehr entgegenkommt.

Eine Seele 4 kann in weiterer Fortbildung aus einem einfachen Drahtseil bestehen. Ein Drahtseil ist flexibel, genügend druck- und zugfest, robust und preiswert. Es erfüllt alle Anforderungen an eine Seele.

Am Kopfstück 1 kann in weiterer Ausgestaltung eine Kamera angeordnet sein, um ein Rohr, eine Wegstrecke, einen Einlauf, einen Abzweig oder eine Arbeit zu beobachten.

Für Rohrarbeiten wird am Kopfstück 1 oder Endstück 2 ein entsprechendes Werkzeug angekoppelt, beispielsweise ein Fräser, ein Bohrer, eine Spirale, ein Düsenkranz, eine Drahtbürste oder eine Kettenschleuder. Mit einem Düsenkranz am Endstück 2 für Rohrspülungen kann sich das Gerät zugleich fortbewegen. Es kann aber auch mit einer flexiblen Stange geschoben, mit einem ankuppelbaren Fahrwerk angetrieben oder mit einem motorischen Eigenantrieb ausgerüstet sein.

Für Druckprüfungen kann ein Druckbalg 7 vorhanden sein, der sich über eine Teillänge oder die gesamte Länge des Gerätes erstreckt und separat von beispielsweise Schläuchen als Stellmittel beaufschlagt werden kann. Mit Drucksensoren im Rohr oder am Gerät kann ein eventueller Druckabfall und damit eine Rohrundichtheit detektiert werden.

Das Gerät mit Druckbalg 7 kann außerdem dazu dienen, als Verpress-Packer oder als Partliner-Packer eingesetzt zu werden oder es befördert Verpress- oder Partlinermaterial zu einer Schadstelle. Auch kann dazu dienen, einen Inliner in eine Rohrleitung einzuziehen.

Um ein oder mehrere nichtlenkbare Aggregate an einen Arbeitsort zu schaffen, können diese einfach an das lenkbare Gerät angekuppelt und zum Einsatzort geschleppt werden.

Zum Endstück 2 laufen Zuleitungen 6, wie Steuerleitungen für die Lenkung, und sämtliche Leitungen für die Versorgung des Gerätes, wie Leitungen für einen Druckluftfräser, für einen Druckbalg 7, für Beleuchtung, eine oder mehrere Kameras, für einen Spülkranz usw. Diese Zuleitungen 6 führen vom Endstück zu einem Versorgungsfahrzeug mit einem Bedienstand.

### Bezugszeichen:

- 1: Kopfstück
- 2: Endstück
- 3: Zug- oder Druckelement
- 4: Seele
- 5: Zug- oder Druckelement
- 6: Zuleitungen
- 7: Druckbalg

## Patentansprüche

1. Über flexible Zuleitungen versorgtes Gerät für Rohrinnenaufgaben Dichtheitsprüfung, Bearbeitung, Sanierung, Reinigung, optische Inspektion und/oder Beförderung von Arbeitsmitteln, wobei ein Kopfstück an einem wurmartigen, lenkaktiv krümmbaren Bereich des Gerätes von einem ersten Rohr aus ein Rohrverzweigungssystem gezielt befahren kann, besitzt einen über seine gesamte Länge und in allen Raumrichtungen und abverlangten Biegewinkeln lenkaktiv krümmbaren Korpus, der einerseits von dem Kopfstück (1) und andererseits von einem Endstück (2) begrenzt wird, an das die flexiblen Zuleitungen (6) angeschlossen sind, die das Gerät beim Befahren des Rohrverzweigungssystems nachführt, und wobei im Korpus mindestens drei längenmäßig veränderbare Zug- oder Druckelemente (3, 5) für das lenkaktive Krümmen des Gerätes angeordnet sind.

2. Gerät nach Anspruch 1,
**dadurch gekennzeichnet,**
**dass** die Zug- oder Druckelemente (3, 5) mechanisch, pneumatisch, hydraulisch, elektrisch oder elektromagnetisch gestellt werden.

3. Gerät nach Anspruch 1 und 2,
**dadurch gekennzeichnet,**
**dass** die Zug- oder Druckelemente (3, 5) aus luftdichten und flexiblen Schläuchen bestehen, die bei Druckbeaufschlagung kontrahieren oder sich längen.

4. Gerät nach einem der Ansprüche 1 bis 3,
**dadurch gekennzeichnet,**
**dass** das Gerät eine biegsame oder gelenkige Seele (4) und/oder Hülle aufweist, um die oder in der die Zug- oder Druckelemente (3, 5) angeordnet sind.

5. Gerät nach Anspruch 3 und 4,
**dadurch gekennzeichnet,**
**dass** um eine Seele (4) oder in einer Hülle vier Schläuche (3, 5) angeordnet sind.

6. Gerät nach Anspruch 4 oder 5,
**dadurch gekennzeichnet,**
**dass** die Seele (4) aus einem Stahlseil besteht.

7. Gerät nach Anspruch 1, 2 oder 3,
**dadurch gekennzeichnet,**
**dass** das Gerät keine Seele (4) oder Hülle (7) besitzt.

8. Gerät nach Anspruch 1,
**dadurch gekennzeichnet,**
**dass** eine Kamera am Kopfstück (1) starr oder eigenbeweglich angeordnet ist.

9. Gerät nach Anspruch 1,
**dadurch gekennzeichnet,**
**dass** am Kopfstück (1) oder Endstück (2) mindestens ein separat angetriebenes und vorzugsweise wechselbares Rohrbearbeitungsmittel angeordnet ist.

10. Gerät nach Anspruch 9,
**dadurch gekennzeichnet,**
**dass** das Rohrbearbeitungsmittel ein Fräser, ein Bohrer, eine Spirale, ein Düsenkranz, eine Drahtbürste oder eine Kettenschleuder ist.

11. Gerät nach Anspruch 9 oder 10,
**dadurch gekennzeichnet,**
**dass** das Kopfstück (1) mit seinem Rohrbearbeitungsmittel auf eine beliebige Bearbeitungsstelle ausrichtbar und fixierbar ist.

12. Gerät nach Anspruch 1,
**dadurch gekennzeichnet,**
**dass** die gesamte oder eine anteilmäßige Länge des Gerätes von einem Druckbalg (7) zum Abdichten eines Rohres umgeben ist.

13. Gerät nach Anspruch 12,
**dadurch gekennzeichnet,**
**dass** der Druckbalg (7) die Funktion eines Verpresspackers oder Partliner-Packers erfüllt oder einen solchen vor Ort bringt.

14. Gerät nach Anspruch 1,
**dadurch gekennzeichnet,**
**dass** zum Bewegen im Rohrsystem ein Eigenantrieb dient.

15. Gerät nach Anspruch 14,
**dadurch gekennzeichnet,**
**dass** den Eigenantrieb ein im Endstück (2) angeordneter Düsenkranz realisiert.

16. Gerät nach Anspruch 1,
**dadurch gekennzeichnet,**
**dass** zwecks gelenkten Schleppens unlenkbare Aggregate ankoppelbar sind.

17. Gerät nach Anspruch 1,
**dadurch gekennzeichnet,**
**dass** das Gerät zum gelenkten Einbringen eines Inliners in eine Rohrleitung nutzbar ist.
